# FASCICULE DE BREVET EUROPEEN

(11) **EP 0 460 983 B1**
(45) Date de publication et mention de la délivrance du brevet: **29.03.1995**
(21) Numéro de dépôt: 91401212.5
(22) Date de dépôt: 07.05.1991
(51) Int. Cl.: G02B 27/00, H04N 5/74

(54) **Dispositif de visualisation d'images simulées pour casque**
Anzeigevorrichtung von simulierten Bildern für einen Helm
Simulated pictures display device for helmet

(30) Priorité: 01.06.1990 FR 9006873
(43) Date de publication de la demande: 11.12.1991
(73) Titulaire: THOMSON-CSF, 75008 Paris (FR)
(72) Inventeur: Lacroix, Michel, F-92045 Paris la Défense (FR)
(74) Mandataire: Chaverneff, Vladimir

(56) Documents cités:
- US-A- 3 923 370
- US-A- 4 340 878
- US-A- 4 465 347
- US-A- 4 588 382
- US-A- 4 755 868
- N.T.I.S. TECH NOTES, novembre 1986, page 1160, Springfield, VA, US; "Fiberoptic helmet mounted display"

## Description

La présente invention se rapporte à un dispositif de visualisation d'images simulées pour casque.

Pour restituer des images dans un simulateur, tel qu'un simulateur d'aéronef, on a généralement recours à des systèmes tels que des moniteurs associés à une optique de renvoi à l'infini ou à des systèmes collimatés hors d'axe à écran sphérique et miroir, ce miroir pouvant être une sphère de grand diamètre (plusieurs mètres). De tels systèmes fonctionnent correctement mais ont un encombrement et un poids souvent très élevés, et peuvent nécessiter une infrastructure complexe.

On connaît par ailleurs des dispositifs de visualisation à optique à lentilles et miroir, fixés sur un casque porté par l'utilisateur. Ces dispositifs sont généralement de faible encombrement et de faible poids, mais leur champ visuel est réduit et leur rendement lumineux faible. On connaît d'après le document NTIS Tech Notes, nov 1986, page 1160, Springfield, VA, USA "Fiber Optic Helmet Mounted Display" un dispositif de visualisation pour casque à fibres optiques de transport d'image et détecteur de position de tête, mais la partie optique n'y est pas décrite. On connaît d'après les documents US-A-4 465 347 et US-A-3 923 370 des dispositifs de visualisation pour casque à miroirs paraboliques dont le champ visuel est réduit.

La présente invention a pour objet un dispositif de visualisation d'images simulées pour casque qui soit léger, de faible encombrement, et qui permette de restituer les images avec un champ le plus grand possible et le meilleur rendement lumineux possible.

Le dispositif de visualisation conforme à l'invention est un dispositif de visualtion d'images simulées pour casque, comportant un générateur d'images distant, un projecteur distant, une liaison optique pour fibres optiques entre le projecteur et le casque, un dispositif optique de reprise fixé au casque, et un dispositif de détection de la position de la tête de l'utilisateur relié au générateur d'images, et un dispositif optique fixé au casque, caractérisé par le fait que le dispositif optique comporte au moins un dispositif de collimation à l'infini à miroir et écran sphériques dont la face concave est tournée vers l'utilisateur, l'écran et le miroirs étant agencés de façon qu'au moins une partie des rayons lumineux quittant le dispositif optique de reprise se réfléchissent successivement sur la face convexe de l'écran et sur la face concave du miroir sphérique.

La présente invention sera mieux comprise à la lecture de la description détaillée d'un mode de réalisation, pris à titre d'exemple non limitatif, et illustré par le dessin annexé, sur lequel :
- la figure 1 est une vue schématique d'un dispositif conforme à l'invention,
- la figure 2 est une vue de dessus de la partie optique, solidaire du casque, du dispositif de la figure 1,
- la figure 3 est une vue de côté de la partie optique de la figure 2, et
- la figure 4 est une vue schématique d'un mode de réalisation de projecteur pouvant être utilisé dans le dispositif de la figure 1.

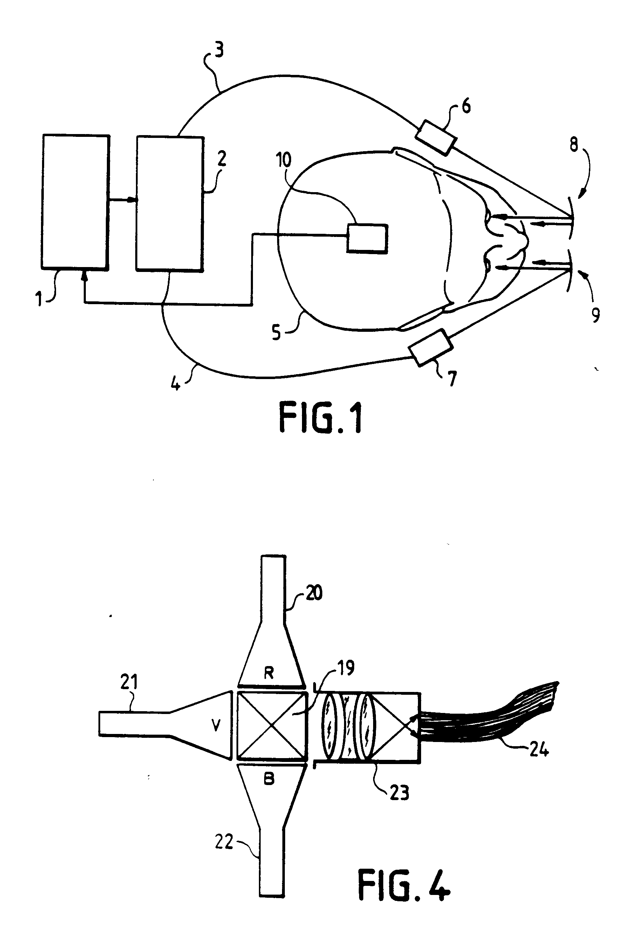

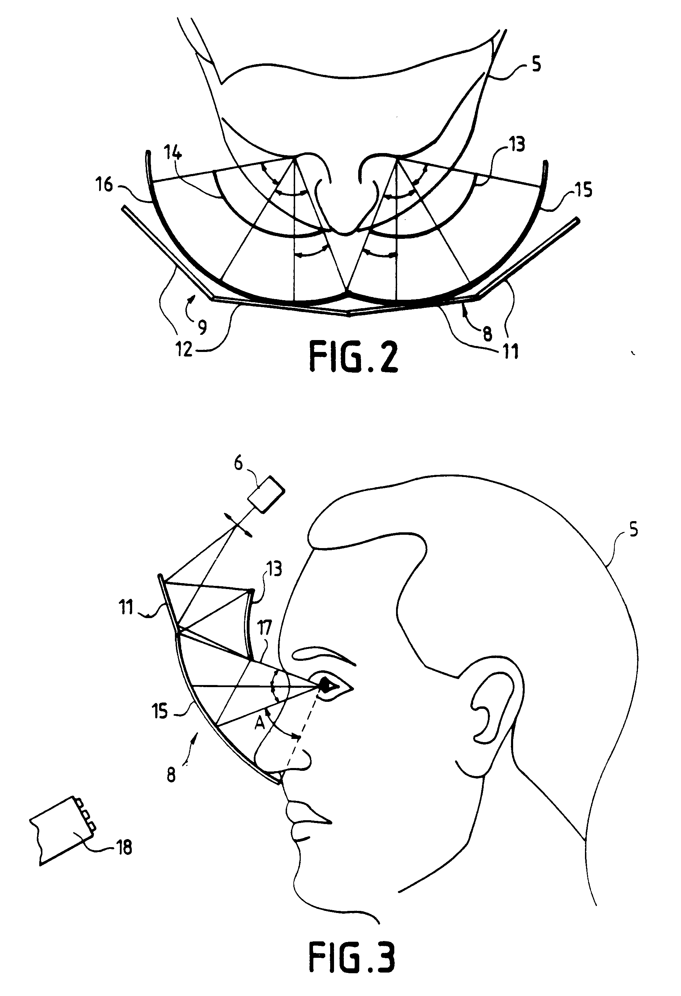

Le dispositif de visualisation représenté en figure 1 comporte essentiellement un générateur d'images 1, un projecteur 2, une fibre optique 3,4 de transport d'image relative à chaque oeil de l'utilisateur 5, un dispositif optique de reprise 6,7 fixé en bout de chaque fibre optique, et un dispositif optique de formation d'images correspondant 8,9, décrit plus en détail ci-dessous en référence aux figures 2 et 3.

Les éléments 1 et 2 peuvent être éloignés de l'utilisateur, les fibres optiques 3 et 4 ayant la longueur nécessaire. Les éléments 6 à 9 sont fixés de façon appropriée sur un casque (non représenté) porté par l'utilisateur 5. En outre, on fixe sur ce casque un dispositif 10, détecteur de la position de la tête de l'utilisateur, de type connu en soi. Ce dispositif 10 est relié au générateur d'images 1 pour y commander, de façon connue en soi, les déplacements d'une "fenêtre" correspondant à la zone d'intérêt devant être vue par l'utilisateur.

On a représenté en détail sur les figures 2 et 3 les dispositifs optiques 8 et 9. Ces dispositifs 8 et 9 sont identiques et comportent chacun deux canaux de formation d'images adjacentes pour en augmenter le champ horizontal, mais il est bien entendu que si l'on n'avait pas besoin d'obtenir un champ horizontal très important, on pourrait se contenter d'un seul canal pour chacun des dispositifs 8 et 9. Dans le présent exemple, chaque canal a un champ horizontal d'environ 50°.

Les dispositifs 8 et 9 comportent : un miroir de renvoi plan (11, 12 respectivement), un écran sphérique (13, 14 respectivement), et un miroir sphérique, au moins en partie semi-réfléchissant ( 15, 16 respectivement). Les faces concaves des écrans et des miroirs sphériques sont tournées vers l'utilisateur. Les miroirs plans et les écrans sont situés au-dessus d'un plan horizontal passant par les centres des yeux de l'observateur, alors que les miroirs sphériques semi-transparents 15, 16 sont sensiblement au niveau des yeux de l'utilisateur 5. Ces miroirs 15, 16 sont fixés à quelques centimètres des yeux de l'utilisateur. Lorsque l'utilisateur regarde droit devant lui, son champ visuel vertical instantané, qui est d'environ 40°, couvre la partie supérieure des miroirs 15, 16, la partie inférieure de ces miroirs correspondant à un champ vertical d'environ 40° (angle A sur la figure 3) que l'utilisateur peut couvrir en baissant les yeux. Les écrans 13, 14 sont disposés par rapport aux miroirs 15, 16 de façon que lorsque l'utilisateur regarde droit devant lui la limite supérieure 17 de son champ vertical soit pratiquement tangente aux bords inférieurs de ces écrans et aux bords supérieurs des miroirs 15, 16 ( voir figure 3 ). Les dispositifs 6, 7 sont des dispositifs, de type connu en soi, à lentilles permettant de projeter sur les miroirs 11, 12 les images transportées par les fibres 3,4. Dans le cas, représenté sur le dessin, où les dispositifs 8 et 9 sont à deux canaux, les fibres 3 et 4 sont doublées, ainsi que les dispositifs 6 et 7 et les miroirs 11,12. Les images formées par les dispositifs 6, 7 sur les miroirs 11, 12 sont renvoyées par ces miroirs 11, 12 sur les écrans 13, 14. L'utilisateur 5 peut ainsi, en regardant les miroirs 15, 16 voir les images formées sur les écrans 13, 14.

Bien entendu, le générateur d'images et les projecteurs sont réalisés de façon à assurer une parfaite superposition des images vues par l'oeil droit et l'oeil gauche dans la zone de recouvrement des champs visuels de ces deux yeux. Les miroirs 15 et 16 sont semi-réfléchissants pour permettre à l'utilisateur de voir à travers eux les instruments du tableau de bord 18.

Le dispositif 10, captant les mouvements de la tête de l'utilisateur, envoie au générateur d'images 1 des informations permettant de commander, de façon connue en soi, les déplacements relatifs de la "zone d'intérêt" vue par l'utilisateur en correspondance avec les mouvements de sa tête.

On a représenté en figure 4, un mélangeur dichroïque utilisable avec des tubes haute brillance. Ce mélangeur comporte un prisme dichroïque 19 à trois faces duquel sont accolés des tubes cathodiques à haute brillance 20 à 22, respectivement rouge, vert et bleu. A une quatrième face du prisme 19, on accole un dispositif 23 d'optique de couplage à une fibre optique 24. Ce dispositif mélangeur est utilisé pour chacun des canaux de visualisation relatifs à chaque oeil de l'observateur.

Selon un mode de réalisation de l'invention, on utilise un projecteur à "valve de lumière" ou à cristaux liquides de type bien connu en soi.

Si le projecteur utilisé est du type à tubes haute brillance, on réalise la correction des distorsions géométriques des projecteurs, et de toute la partie optique du simulateur de l'invention dans les projecteurs. Il est relativement facile d'y faire toutes les corrections nécessaires, en particulier pour obtenir la superposition parfaite des images dans la zone de recouvrement (s'étendant, dans le sens horizontal, sur 30 à 40° environ) des champs visuels relatifs à l'oeil droit et à l'oeil gauche.

Si le protecteur utilisé est du type à valve de lumière ou à cristaux liquides, on réaliser la correction des distorsions géométriques dans le générateur d'image car il n'est actuellement pas possible d'effectur de correction dans les projecteurs.

Le dispositif de l'invention permet ainsi d'obtenir un grand champ visuel : avec deux canaux pour chaque oeil, on arrive à un champ monoculaire d'environ 100° dans le sens horizontal et 40° dans le sens vertical, le champ total étant d'environ 160° dans le sens horizontal et 40° dans le sens vertical (avec un recouvrement de 40° au centre). Le miroir sphérique semi-réfléchissant est le dispositif qui atténue le moins les images extérieures (telles que la planche de bord 18).

Un des avantages d'un mode de réalisation de l'invention réside dans l'utilisation de projecteurs à tubes haute brillance qui permettent de réaliser la correction des distorsions géométriques dans les projecteurs, ce qui décharge le générateur d'image de ce travail qui est coûteux en temps calcul. L'utilisation de projecteurs à tubes haute brillance est possible en raison de leur bon rendement lumineux.

## Revendications

1. Dispositif de visualisation d'images simulées pour casque, comportant un générateur d'images distant (1), un projecteur distant (2), une liaison optique pour fibres optiques (3,4) entre le projecteur et le casque, un dispositif optique de reprise (6,8) fixé au casque, et un dispositif de détection de la position de la tête de l'utilisateur (10) relié au générateur d'images, et un dispositif optique fixé au casque, caractérisé par le fait que le dispositif optique comporte au moins un dispositif de collimation à l'infini à miroir (15,16) et écran (13,14) sphériques dont la face concave est tournée vers l'utilisateur, l'écran et le miroir étant agencés de façon qu'au moins une partie des rayons lumineux quittant le dispositif optique de reprise se réfléchissent successivement sur la face convexe de l'écran et sur la face concave du miroir sphérique.

2. Dispositif selon la revendication 1, caractérisé par le fait qu'il comporte pour chaque oeil de l'utilisateur une liaison par fibre optique (3,4), une optique de reprise (6,7), un écran (13,14) et un miroir sphérique (15,16).

3. Dispositif selon la revendication 1 ou 2, caractérisé par le fait que les miroirs sphériques sont au moins en partie semi-réfléchissants.

4. Dispositif selon l'une des revendications 1 à 3, caractérisé par le fait que le projecteur est du type à valve de lumière .

5. Dispositif selon l'une des revendications 1 à 3, caractérisé par le fait que le projecteur est du type à cristaux liquides.

6. Dispositif selon l'une des revendications 1 à 3, caractérisé par le fait que le projecteur est du type à tubes cathodiques à haute brillance.

7. Dispositif selon l'une des revendications 1 à 5, caractérisé par le fait que la correction des distorsions géométriques est effectuée dans le générateur d'images.

8. Dispositif selon l'une des revendications 1 à 3 et 6, caractérisé par le fait que la correction des distorsions géométriques est effectuée dans le projecteur.

9. Simulateur, caractérisé par le fait qu'il comporte un dispositif de visualisation selon l'une quelconque des revendications précédentes.

## Patentansprüche

1. Vorrichtung zur Anzeige von simulierten Bildern für einen Helm, mit einem entfernt angeordneten Bildgenerator (1), einem entfernt angeordneten Projektor (2), einer optischen Verbindung über Lichtleitfasern (3, 4) zwischen dem Projektor und dem Helm, mit einer optischen Aufbereitungsvorrichtung (6, 8), die auf dem Helm befestigt ist, einer Detektorvorrichtung (10) zur Erfassung der Lage des Kopfes des Benutzers, die mit dem Bildgenerator verbunden ist, und mit einer auf dem Helm befestigten optischen Vorrichtung, dadurch gekennzeichnet, daß die optische Vorrichtung mindestens eine Vorrichtung zur Kollimation ins Unendliche mit einem sphärischen Spiegel (15, 16) und einem sphärischen Schirm (13, 14) aufweist, dessen konkave Seite zum Benutzer zeigt, wobei der Schirm und der Spiegel so angeordnet sind, daß mindestens ein Teil der aus der optischen Aufbereitungsvorrichtung kommenden Lichtstrahlen nacheinander an der konvexen Seite des Schirms und der konkaven Seite des sphärischen Spiegels reflektiert wird.

2. Vorrichtung nach Anspruch 1, dadurch gekennzeichnet, daß sie für jedes Auge des Benutzers eine Verbindung über Lichtleitfasern (3, 4), eine Aufbereitungsoptik (6, 7), einen Schirm (13, 14) und einen sphärischen Spiegel (15, 16) enthält.

3. Vorrichtung nach Anspruch 1 oder 2, dadurch gekennzeichnet, daß die sphärischen Spiegel mindestens teilweise halbreflektierend sind.

4. Vorrichtung nach einem der Ansprüche 1 bis 3, dadurch gekennzeichnet, daß der Projektor vom Lichtröhrentyp ist.

5. Vorrichtung nach einem der Ansprüche 1 bis 3, dadurch gekennzeichnet, daß der Projektor vom Flüssigkristalltyp ist.

6. Vorrichtung nach einem der Ansprüche 1 bis 3, dadurch gekennzeichnet, daß der Projektor vom Typ der lichtstarken Kathodenstrahlröhren ist.

7. Vorrichtung nach einem der Ansprüche 1 bis 5, dadurch gekennzeichnet, daß die Korrektur der geometrischen Verzerrungen im Bildgenerator erfolgt.

8. Vorrichtung nach einem der Ansprüche 1 bis 3 und 6, dadurch gekennzeichnet, daß die Korrektur der geometrischen Verzerrungen im Projektor erfolgt.

9. Simulator, dadurch gekennzeichnet, daß er eine Vorrichtung zur Anzeige nach einem beliebigen der vorhergehenden Ansprüche enthält.

## Claims

1. Simulated image display device for a helmet, including a far-field image generator (1), a far-field projector (2), an optical connection for optical fibres (3, 4) between the projector and the helmet, an optical pickup device (6, 8) fixed to the helmet, and a device (10) for detecting the position of the head of the user, which device is connected to the image generator, and an optical device fixed to the helmet, characterized in that the optical device includes at least one device for collimating at infinity, having a mirror (15, 16) and a screen (13, 14) which are spherical, the concave face of which points towards the user, the screen and the mirror being arranged so that at least a portion of the light rays leaving the optical pickup device are successively reflected from the convex face of the screen and from the concave face of the spherical mirror.

2. Device according to Claim 1, characterized in that it includes, for each eye of the user, a fibre-optic connection (3, 4), pickup optics (6, 7), a screen (13, 14) and a spherical mirror (15, 16)

3. Device according to Claim 1 or 2, characterized in that the spherical mirrors are at least partly semi-reflecting.

4. Device according to one of Claims 1 to 3, characterized in that the projector is of the type with a light valve.

5. Device according to one of Claims 1 to 3, characterized in that the projector is of the liquid-crystal type.

6. Device according to one of Claims 1 to 3, characterized in that the projector is of the type with cathode-ray tubes having high brilliance.

7. Device according to one of Claims 1 to 5, characterized in that the correction for geometrical distortions is carried out in the image generator.

8. Device according to one of Claims 1 to 3 and 6, characterized in that the correction for geometrical distortions is carried out in the projector.

9. Simulator, characterized in that it includes a display device according to any one of the preceding claims.
